# EUROPEAN PATENT APPLICATION

(11) **EP 2 471 830 A1**
(43) Date of publication of application: **04.07.2012**
(21) Application number: 10817263.6
(22) Date of filing: 16.09.2010
(51) Int. Cl.: C08G 18/48, C08G 101/00

(54) **PROCESS FOR PRODUCTION OF FLEXIBLE POLYURETHANE FOAM**

(30) Priority: 18.09.2009 JP 2009217211
(71) Applicant: Asahi Glass Company, Limited, Tokyo 100-8405 (JP)
(72) Inventor: SASAKI, Takayuki, Tokyo 100-8405 (JP); KAKU, Daisuke, Tokyo 100-8405 (JP)
(74) Representative: Blodig, Wolfgang
(86) International application number: PCT/JP2010/066090
(87) International publication number: WO 2011/034150

(57) **Abstract**

To provide a process for producing a low resilience and low density flexible polyurethane foam, without using dibutyltin dilaurate as a urethane-forming catalyst.

A process for producing a flexible polyurethane foam, which comprises reacting a polyol mixture (X) containing a polyol (A) which is a polyoxyalkylene polyol having an average of from 2 to 3 hydroxy groups, a hydroxy value of from 10 to 60 mgKOH/g and an oxyethylene group content of from 0 to 30 mass%, obtained by subjecting an alkylene oxide to ring-opening addition polymerization to an initiator, a polyol (B) which is a polyoxyalkylene polyol having an average of from 2 to 3 hydroxy groups and a hydroxy value of from 100 to 250 mgKOH/g and a monool (D) which is a polyoxyalkylene monool having a hydroxy value of from 10 to 200 mgKOH/g, with a polyisocyanate compound in the presence of dioctyltin dilaurate as a urethane-forming catalyst, a blowing agent and the like, with an isocyanate index of at least 90.

## Description

### TECHNICAL FIELD

The present invention relates to a process for producing a low resilience flexible polyurethane foam.

### BACKGROUND ART

Heretofore, a flexible polyurethane foam having a low rebound resilience i.e. low resiliency, has been used for a shock absorber, a sound absorbent, a vibration absorber, etc. Further, it is known that when it is used as a cushion material for chairs, mattress, etc., the body pressure distribution will be more uniform, whereby feeling of fatigue, pressure sores, etc. will be reduced. As an example, a low resilience polyurethane foam disclosed in Patent Document 1, is known.

On the other hand, in Europe, EUROPUR which is an association of flexible polyurethane foam blocks manufacturers, defines Certi-PUR which is a voluntary standard to limit use of materials which may adversely affect the human body and the environment, and such materials correspond to tributyltin, dibutyltin and monobutyltin. If dibutyltin dilaurate is used as a urethane-forming catalyst as disclosed in Patent Document 1, dibutyltin may elute on the surface of a flexible polyurethane foam, and accordingly use of a catalyst which replaces dibutyltin dilaurate is required.

### PRIOR ART DOCUMENTS

### PATENT DOCUMENT

Patent Document 1: WO2008/050841

### DISCLOSURE OF INVENTION

### TECHNICAL PROBLEM

The present invention provides a process for producing a flexible polyurethane foam being excellent in the low resiliency and having a low density, without using dibutyltin dilaurate as a urethane-forming catalyst.

### SOLUTION TO PROBLEM

The present invention provides the following [1] to [10].
[1] A process for producing a flexible polyurethane foam, which comprises reacting a polyol mixture (X) and a polyisocyanate compound in the presence of a urethane-forming catalyst, a blowing agent and a foam stabilizer, wherein
   the polyol mixture (X) contains the following polyol (A), the following polyol (B) and the following monool (D);
   the ratio of all active hydrogen-containing compounds and the polyisocyanate compound in the materials is at least 90 by the isocyanate index; and
   the urethane-forming catalyst contains dioctyltin dilaurate;
   polyol (A): a polyoxyalkylene polyol having an average of from 2 to 3 hydroxy groups, a hydroxy value of from 10 to 60 mgKOH/g and an oxyethylene group content of from 0 to 30 mass%;
   polyol (B): a polyoxyalkylene polyol having an average of from 2 to 3 hydroxy groups and a hydroxy value of from 100 to 250 mgKOH/g;
   monool (D): a polyoxyalkylene monool having a hydroxy value of from 10 to 200 mgKOH/g.
[2] The process for producing a flexible polyurethane foam according to [1], wherein the ratio of the polyol (A) and the polyol (B) is such that the proportion of the polyol (A) is from 5 to 50 parts by mass per 100 parts by mass of the total amount of the polyol (A) and the polyol (B).
[3] The process for producing a flexible polyurethane foam according to [1] or [2], wherein the proportion of the monool (D) is from 1 to 30 parts by mass per 100 parts by mass of the total amount of the polyol (A) and the polyol (B).
[4] The process for producing a flexible polyurethane foam according to any one of [1] to [3], wherein the monool (D) is a polyoxypropylene monool obtained by subjecting only propylene oxide to ring-opening addition polymerization to an initiator.
[5] The process for producing a flexible polyurethane foam according to any one of [1] to [4], wherein the polyol mixture (X) further contains the following polyol (C) in an amount of from 2 to 10 parts per 100 parts by mass of the entire polyol mixture:
   polyol (C): a polyoxyalkylene polyol having an average of from 2 to 6 hydroxy groups, a hydroxy value of from 10 to 60 mgKOH/g and an oxyethylene group content of from 50 to 100 mass%.
[6] The process for producing a flexible polyurethane foam according to any one of [1] to [5], wherein the urethane-forming catalyst is contained in an amount of from 0.01 to 3.0 parts by mass per 100 parts by mass of the polyol mixture (X).
[7] The process for producing a flexible polyurethane foam according to any one of [1] to [6], wherein the blowing agent is water.
[8] The process for producing a flexible polyurethane foam according to any one of [1] to [7], wherein the isocyanate index is from 90 to 130.
[9] The process for producing a flexible polyurethane foam according to any one of [1] to [8], which is a method of foaming in an open system (slab method).
[10] A mattress using a flexible polyurethane foam produced by the process as defined in any one of [1] to [9].

### ADVANTAGEOUS EFFECTS OF INVENTION

According to the present invention, a flexible polyurethane foam being excellent in the low resiliency and having a low density can be produced by using dioctyltin dilaurate as a urethane-forming catalyst, without use of materials which may adversely affect the human body and the environment.

### DESCRIPTION OF EMBODIMENTS

In the present invention, "a reactive mixture" is a mixture of the polyol mixture, the polyisocyanate compound, the urethane-forming catalyst, the blowing agent, the foam stabilizer, etc.

A flexible polyurethane foam to be obtained by the present invention is produced by reacting the polyol mixture (X) and the polyisocyanate compound in the presence of the urethane-forming catalyst, the blowing agent and the foam stabilizer. Now, the respective raw materials will be described below.

### <Polyol mixture (X)>

The polyol mixture (X) to be used in the present invention contains the after-mentioned polyol (A), polyol (B) and monool (D). It preferably further contains a polyol (C). Further, in some cases, it may contain a polyol (hereinafter referred to as a polyol (E)) other than the polyol (A), the polyol (B) and the monool (D), or a monool other than the monool (D). Now, the respective polyols will be described.

### (Polyol (A))

The polyol (A) in the present invention is a polyoxyalkylene polyol having an average of from 2 to 3 hydroxy groups and a hydroxy value of from 10 to 60 mgKOH/g. This polyoxyalkylene polyol is obtainable by subjecting an alkylene oxide to ring-opening addition polymerization to an initiator in the presence of a polymerization catalyst.

The polymerization catalyst to be used for preparation of the polyol (A) may, for example, be an alkali metal compound catalyst (such as sodium type catalyst, potassium type catalyst or cesium type catalyst), a cationic polymerization catalyst, a double metal cyanide complex catalyst or a phosphazenium compound. Preferred is an alkali metal catalyst in view of availability at a low cost or a double metal cyanide complex catalyst with a view to obtaining a polyol with little by-products.

The sodium type catalyst or the potassium type catalyst may, for example, be sodium metal, potassium metal, a sodium alkoxide or a potassium alkoxide (such as sodium methoxide, sodium ethoxide, sodium propoxide, potassium methoxide, potassium ethoxide or potassium propoxide), sodium hydroxide, potassium hydroxide, sodium carbonate or potassium carbonate.

The cesium type catalyst may, for example, be cesium metal, a cesium alkoxide (such as cesium methoxide, cesium ethoxide or cesium propoxide), cesium hydroxide or cesium carbonate.

The cationic polymerization catalyst is preferably MoO₂(diketonate)Cl, MoO₂(diketonate)OSO₂CF₃, trifluoromethanesulfonic acid, boron trifluoride, a boron trifluoride-coordinated compound (such as boron trifluoride diethyl etherate, boron trifluoride dibutyl etherate, boron trifluoride dioxanate, boron trifluoride acetic anhydrate or a boron trifluoride triethylamine complex compound), an aluminum or boron compound having at least one aromatic hydrocarbon group containing a fluorine atom or aromatic hydrocarbon oxy group containing a fluorine atom, or the like.

The aromatic hydrocarbon group containing a fluorine atom may, for example, be pentafluorophenyl, tetrafluorophenyl, trifluorophenyl, 3,5-bis(trifluoromethyl)trifluorophenyl, 3,5-bis(trifluoromethyl)phenyl, β-perfluoronaphtyl or 2,2',2"-perfluorobiphenyl.

The aromatic hydrocarbon oxy group containing a fluorine atom is preferably a hydrocarbon oxy group having an oxygen atom bonded to the above aromatic hydrocarbon group containing a fluorine atom.

The double metal cyanide complex catalyst (hereinafter sometimes referred to as "DMC" catalyst) has an organic ligand. The organic ligand may be tert-butyl alcohol, n-butyl alcohol, iso-butyl alcohol, tert-pentyl alcohol, iso-pentyl alcohol, N,N-dimethylacetamide, ethylene glycol mono-tert-butyl ether, ethylene glycol dimethyl ether (also called glyme), diethylene glycol dimethyl ether (also called diglyme), triethylene glycol dimethyl ether (also called triglyme), iso-propyl alcohol or dioxane. Dioxane may be either 1,4-dioxane or 1,3-dioxane, but is preferably 1,4-dioxane. One type of the organic ligand may be used, or two or more types may be used in combination.

Among them, the catalyst preferably has tert-butyl alcohol as the organic ligand. Accordingly, it is preferred to use a DMC catalyst having tert-butyl alcohol as at least part of the organic ligand. Such a DMC catalyst has high activity, and a polyol with a low total degree of unsaturation can be produced with it.

As the initiator to be used for preparation of the polyol (A), compounds having 2 or 3 active hydrogen atoms (hydrogen atoms of the hydroxy group or the amino group, with which the alkylene oxide may react) are used alone or in combination. The initiator is preferably a hydroxy group-containing compound such as a polyhydric alcohol or a polyhydric phenol. A compound having 4 or more active hydrogen atoms may be used in combination in a small amount. The compound having two active hydrogen atoms may, for example, be specifically a dihydric alcohol such as ethylene glycol, propylene glycol, 1,4-butanediol, diethylene glycol or dipropylene glycol. Further, the compound having 3 active hydrogen atoms may, for example, be specifically a trihydric alcohol such as glycerin or trimethylolpropane. Further, it is preferred to use a high hydroxy value polyoxyalkylene polyol obtained by subjecting an alkylene oxide, preferably propylene oxide to ring-opening addition polymerization to such a compound. Specifically, it is preferred to use a high hydroxy value polyoxyalkylene polyol (preferably polyoxypropylene polyol) having 2 or 3 hydroxy groups and having a molecular weight at a level of from 200 to 500 per one hydroxy group, i.e. a hydroxy value of from 110 to 280 mgKOH/g.

The alkylene oxide to be used for preparation of the polyol (A) may, for example, be ethylene oxide, propylene oxide, 1,2-epoxybutane or 2,3-epoxybutane. Among them, propylene oxide, or a combination of propylene oxide with ethylene oxide is preferred, and propylene oxide alone is particularly preferred. That is, the polyol (A) is preferably a polyoxypropylene polyol obtained by subjecting propylene oxide alone to ring-opening addition polymerization to the initiator. When propylene oxide alone is used, durability of a flexible polyurethane foam to be obtained when humidified will be improved.

In a case where propylene oxide and ethylene oxide are used in combination, either polymerization method of block polymerization and random polymerization may be employed. Further, both of block polymerization and random polymerization may be combined. In the case of block polymerization, the order of ring-opening addition polymerization is preferably such that propylene oxide and then ethylene oxide are added in this order, or ethylene oxide is added first, and propylene oxide and ethylene oxide are added in this order. By ring-opening addition polymerization in this order, many of hydroxy groups of the polyoxyalkylene polyol (A) become primary hydroxy groups, whereby the reactivity between the polyol (A) and the polyisocyanate compound will be high. As a result, moldability of the flexible polyurethane foam to be obtained are likely to be good. The terminal is preferably ethylene oxide.

The oxyethylene group content in the polyol (A) is preferably at most 30 mass%, particularly preferably at most 15 mass%. Further, the lower limit is 0 mass%. When the oxyethylene group content is at most 30 mass%, the durability when humidified will be good.

The average number of hydroxy groups in the polyol (A) in the present invention is from 2 to 3, more preferably from 2 to 2.7. The average number of hydroxy groups in the present invention means an average of active hydrogen atoms in the initiator. When the average number of hydroxy groups is from 2 to 3, physical properties of a flexible polyurethane foam to be obtained, such as the compression set will be good. Further, the flexible polyurethane foam to be obtained will well elongate, its hardness will not be high but will be moderate, and physical properties such as tensile strength will be good. As the polyol (A), it is preferred to use a polyoxyalkylene diol having 2 hydroxy groups in an amount of from 50 to 100 parts by mass per 100 parts by mass of the polyol (A), whereby the temperature sensitivity of the flexible polyurethane foam to be obtained is likely to be suppressed. The polyol (A) is particularly preferably a polyoxyalkylene diol having 2 hydroxy groups.

The hydroxy value of the polyol (A) in the present invention is from 10 to 60 mgKOH/g. When the hydroxy value is at least 10 mgKOH/g, collapse or the like will be suppressed, whereby the flexible polyurethane foam can be stably produced. Further, when the hydroxy value is at most 60 mgKOH/g, the rebound resilience can be suppressed to be low without impairing the flexibility of the flexible polyurethane foam to be produced. The hydroxy value of the polyol (A) is more preferably from 10 to 50 mgKOH/g, most preferably from 10 to 45 mgKOH/g.

The polyol (A) in the present invention may be a polymer-dispersed polyol.

In the present invention, the polyol being a polymer-dispersed polyol means a disperse system wherein polymer particles (dispersoid) are stably dispersed in the polyol as the base polyol (dispersion medium).

The polymer of the polymer particles may be an addition polymerization polymer or a polycondensation polymer. The addition polymerization polymer may be obtained by homopolymerizing or copolymerizing a monomer such as acrylonitrile, styrene, a methacrylate or an acrylate. Further, the polycondensation polymer may, for example, be polyester, polyurea, polyurethane or polymethylolmelamine. By the presence of the polymer particles in the polyol, the hydroxy value of the polyol can be suppressed to be low, the hardness of the flexible polyurethane foam can be made high, and such is effective to improve mechanical properties such as the tensile strength. Further, the content of the polymer particles in the polymer-dispersed polyol is not particularly limited, and is preferably at most 5 parts by mass per 100 parts by mass of the polyol (A). Further, physical properties (such as the degree of unsaturation and the hydroxy value) of the polymer-dispersed polyol as the polyol are with respect to the base polyol excluding the polymer particles.

### (Polyol (B))

The polyol (B) in the present invention is a polyoxyalkylene polyol having an average of from 2 to 3 hydroxy groups and a hydroxy value of from 100 to 250 mgKOH/g. This polyoxyalkylene polyol can be obtained, in the same manner as the polyol (A), by subjecting an alkylene oxide to ring-opening addition polymerization to an initiator in the presence of a polymerization catalyst.

The polymerization catalyst to be used for preparation of the polyol (B) is preferably a phosphazene compound, a Lewis acid compound or an alkali metal compound catalyst, or a double metal cyanide complex catalyst, and among them, an alkali metal compound catalyst is particularly preferred. The alkali metal compound catalyst is preferably a potassium compound such as potassium hydroxide or potassium methoxide, an alkali metal compound such as cesium metal or a cesium compound such as cesium hydroxide, cesium carbonate or cesium methoxide, or an alkali metal hydroxide.

As the initiator to be used for preparation of the polyol (B), compounds having 2 or 3 active hydrogen atoms in the molecular are used alone or in combination. A compound having 4 or more active hydrogen atoms may be used in combination in a small amount. The compound having 2 or 3 active hydrogen atoms may, for example, be specifically a polyhydric alcohol such as ethylene glycol, propylene glycol, 1,4-butanediol, diethylene glycol, dipropylene glycol, glycerin or trimethylolpropane; a polyhydric phenol such as bisphenol A; or an amine such as monoethanolamine, diethanolamime, triethanolamine or piperazine. Among them, a polyhydric alcohol is particularly preferred. Further, it is preferred to use a high hydroxy value polyoxyalkylene polyol obtained by subjecting an alkylene oxide, preferably propylene oxide to ring-opening addition polymerization to such a compound.

The alkylene oxide to be used for preparation of the polyol (B) may, for example, be ethylene oxide, propylene oxide, 1,2-epoxybutane or 2,3-epoxybutane. Among them, propylene oxide or a combination of propylene oxide with ethylene oxide is preferred, and propylene oxide alone is particularly preferred.

The polyol (B) is preferably a polyol having a low oxyethylene group content, and the oxyethylene group content is preferably from 0 to 20 mass%, more preferably from 0 to 10 mass%. Particularly preferred is a polyoxyalkylene polyol having only oxypropylene groups as the oxyalkylene groups. By using such a polyol having a low oxyethylene group content, the durability of a flexible polyurethane foam to be obtained when humidified will be improved.

The average number of hydroxy groups of the polyol (B) in the present invention is from 2 to 3. When the average number of hydroxy groups is from 2 to 3, physical properties of the flexible polyurethane foam to be obtained, such as the compression set, will be moderate, and the flexible polyurethane foam to be obtained will be excellent in elongation, its hardness will be moderate, and it will be excellent in physical properties such as the tensile strength.

The average number of hydroxy groups of the polyol (B) is preferably from 2 to 2.7, more preferably from 2 to 2.6. When the average number of hydroxy groups of the polyol (B) is within the above range, a flexible polyurethane foam having a low rebound resilience and having a small change of hardness (low temperature sensitivity) will be obtained.

Further, as the polyol (B), it is preferred to use a polyoxyalkylene diol having an average of 2 hydroxy groups and a polyoxyalkylene triol having an average of 3 hydroxy groups in combination, and the proportion of the polyoxyalkylene diol having an average of 2 hydroxy groups contained in 100 parts by mass of the polyol (B) is preferably at least 40 parts by mass, more preferably at least 45 parts by mass.

The hydroxy value of the polyol (B) in the present invention is from 100 to 250 mgKOH/g. When the hydroxy value is at least 100 mgKOH/g, collapse or the like will be suppressed, and a flexible polyurethane foam can be stably produced. Further, when the hydroxy value is at most 250 mgKOH/g, the rebound resilience can be made low without impairing the flexibility of the flexible polyurethane foam to be produced. As the polyol (B), it is preferred to use a polyol having a hydroxy value of from 100 to 200 mgKOH/g.

The polyol (B) in the present invention may be a polymer-dispersed polyol. The polymer of the polymer particles may be the same polymer as disclosed for the polyol (A). Further, the content of the polymer particles in the polymer-dispersed polyol is not particularly limited, and is preferably from 0 to 10 mass% in 100 parts by mass of the polyol (B).

### (Polyol (C))

The polyol (C) in the present invention is a polyoxyalkylene polyol having an average of from 2 to 6 hydroxy groups, a hydroxy value of from 10 to 60 mgKOH/g and an oxyethylene group content of from 50 to 100 mass%. This polyoxyalkylene polyol is obtainable, in the same manner as the polyol (A) or the polyol (B), by subjecting an alkylene oxide to ring-opening addition polymerization to an initiator in the presence of a polymerization catalyst. Further, the polyol (C) may be polyethylene glycol obtained by oligomerization of ethylene oxide. By using the polyol (C), a cell-opening effect is confirmed, and addition of the polyol (C) is effective to improve the air flow.

As the polymerization catalyst to be used for preparation of the polyol (C), an alkali metal compound catalyst is particularly preferred among the above polymerization catalysts. The initiator to be used for preparation of the polyol (C) is particularly preferably a polyhydric alcohol or an amine among the above initiators.

The polyhydric alcohol as the initiator may, for example, be ethylene glycol, propylene glycol, 1,4-butanediol, dipropylene glycol, glycerin, diglycerin or pentaerythritol. The amine as the initiator may, for example, be an amine such as monoethanolamine, diethanolamine, triethanolamine or piperazine.

The alkylene oxide to be used for preparation of the polyol (C) may, for example, be ethylene oxide, propylene oxide, 1,2-epoxybutane or 2,3-epoxybutane. Further, the oxyethylene content in the oxyalkylene group of the polyol (C) is from 50 to 100 mass%, and use of ethylene oxide alone or a combination of propylene oxide with ethylene oxide is preferred. Particularly, as the polyol (C), preferred is a polyol obtainable by subjecting a mixture of propylene oxide and ethylene oxide to ring-opening addition polymerization.

In the polyol (C), the oxyethylene group content is from 50 to 100 mass%, preferably from 55 to 95 mass%, particularly preferably from 60 to 90 mass%. When the oxyethylene group content in the polyol (C) is at least 50 mass%, a high air flow can be secured when the polyol (C) is added.

In the present invention, the average number of hydroxy groups of the polyol (C) is preferably from 2 to 6, more preferably from 3 to 4. Further, the hydroxy value of the polyol (C) is preferably from 10 to 60 mgKOH/g, more preferably from 15 to 50 mgKOH/g.

### (Monool (D))

The monool (D) in the present invention is a polyoxyalkylene monool having a hydroxy value of from 10 to 200 mgKOH/g. This polyoxyalkylene monool is obtained by using an initiator having one active hydrogen atom, and by subjecting an alkylene oxide to ring-opening addition polymerization to the initiator in the presence of a polymerization catalyst, in the same manner as the polyol (A) or the polyol (B).

The polymerization catalyst to be used for preparation of the monool (D) is preferably a DMC catalyst, a phosphazene compound, a Lewis acid compound or an alkali metal compound catalyst, and among them, a double metal cyanide complex catalyst (DMC catalyst) is particularly preferred. As the double metal cyanide complex catalyst, the above double metal cyanide complex catalyst can be used.

As the initiator to be used for preparation of the monool (D), a compound having only one active hydrogen atom is used. It may, for example, be specifically a monohydric alcohol such as methanol, ethanol, n-propyl alcohol, isopropyl alcohol, n-butyl alcohol or tert-butyl alcohol; a polyhydric phenol such as phenol or nonyl phenol; or a secondary amine such as dimethylamine or diethylamine. Further, a high hydroxy value polyoxyalkylene monool having a hydroxy value higher than the hydroxy value of the aimed monool (D) may also be used as the initiator, similar to the high hydroxy value polyoxyalkylene polyol for preparation of the polyol (A) or the like.

The alkylene oxide to be used for preparation of the monool (D) may, for example, be ethylene oxide, propylene oxide, 1,2-epoxybutane or 2,3-epoxybutane. Among them, propylene oxide or a combination of propylene oxide with ethylene oxide is preferred, and propylene oxide alone is particularly preferred. That is, the monool (D) is preferably a polyoxypropylene monool obtained by subjecting propylene oxide alone to ring-opening addition polymerization to the initiator. Use of propylene oxide alone is preferred, whereby the durability of a flexible polyurethane foam to be obtained when humidified will be improved.

The average number of hydroxy groups of the monool (D) in the present invention is 1. Further, the hydroxy value of the monool (D) is from 10 to 200 mgKOH/g, preferably from 10 to 120 mgKOH/g.

Further, the polyol mixture (X) in the present invention may contain a monool (for example, a polyoxypropylene monool having a hydroxy value of higher than 200 mgKOH/g) other than the monool (D), but usually contains no monool other than the monool (D). Even when the polyol mixture in the present invention contains a monool other than the monool (D), the proportion is preferably at most 5 parts by mass, more preferably at most 2 parts by mass per 100 parts by mass of the polyol mixture.

### (Polyol (E))

The polyol (E) in the present invention is a polyol other than the polyol (A), the polyol (B) and the polyol (C), and may, for example, be a polyol having a hydroxy value higher than that of the polyol (B), a polyol having an average number of hydroxy groups larger than those of the polyol (A) and the polyol (B) and having an oxyethylene content higher than that of the polyol (C), or a high molecular weight polyol other than the polyoxyalkylene polyol.

The polyol (E) is preferably a polyol having an average of from 2 to 6 hydroxy groups and a hydroxy value of from 300 to 1,830 mgKOH/g. The polyol (E) is more preferably a polyol having an average of from 3 to 4 hydroxy groups and a hydroxy value of from 300 to 600 mgKOH/g. This polyol is preferably a polyhydric alcohol, an amine having from 2 to 6 hydroxy groups or a polyoxyalkylene polyol. Such a polyol having a high hydroxy value functions as a crosslinking agent, whereby mechanical properties of a flexible polyurethane foam such as hardness will be improved. Particularly when a large amount of a blowing agent is used to produce a low density (light-weight) flexible polyurethane foam, the foaming stability will be good.

The polyhydric alcohol which can be used as the polyol (E) may, for example, be ethylene glycol, propylene glycol, 1,4-butanediol, dipropylene glycol, glycerin, diglycerin or pentaerythritol. The amine having from 2 to 6 hydroxy groups may, for example, be diethanolamine or triethanolamine. The polyoxyalkylene polyol may be a polyoxyalkylene polyol obtained by subjecting an alkylene oxide to ring-opening addition polymerization to an initiator, in the same manner as the polyol (B) or the like. The initiator to be used for preparation of the polyol (E) which is a polyoxyalkylene polyol may, for example, be a polyhydric alcohol which may also be used as the polyol (E) or an initiator to be used for preparation of the polyol (B).

The alkylene oxide to be used for preparation of the polyol (E) which is a polyoxyalkylene polyol may, for example, be ethylene oxide, propylene oxide, 1,2-epoxybutane or 2,3-epoxybutane. Among them, propylene oxide or a combination of propylene oxide with ethylene oxide is preferred, and propylene oxide alone is particularly preferred. That is, the polyol (E) which is a polyoxyalkylene polyol is preferably a polyoxypropylene polyol obtained by subjecting propylene oxide alone to ring-opening addition polymerization to the initiator. The polyol (E) is preferably the polyoxyalkylene polyol among them, particularly preferably polyoxypropylene polyol. Use of propylene oxide alone is preferred, whereby the durability of a flexible polyurethane foam to be obtained when humidified will be improved. The polyols (E) may be used alone or in combination of two or more.

In the present invention, the polyol (E) may be a polyester polyol or a polycarbonate polyol, the average number of hydroxy groups and the hydroxy value of which are not limited to the above range. The average number of hydroxy groups of such a polyol is preferably from 2 to 3, and the hydroxy value is preferably from 20 to 300 mgKOH/g.

### (Blend ratio of polyol mixture (X))

The polyol mixture in the present invention contains the above polyol (A), polyol (B) and monool (D). This polyol mixture preferably further contains the above polyol (C).

In the polyol mixture (X) in the present invention, with respect to the ratio of the polyol (A) and the polyol (B), the proportion of the polyol (A) is preferably from 5 to 50 parts by mass, more preferably from 10 to 30 parts by mass per 100 parts by mass of the total amount of the polyol (A) and the polyol (B). When the proportion of the polyol (A) in the polyol mixture (X) is within the above range, a low resilience flexible polyurethane foam with a small change in the rebound resilience and the hardness relative to the temperature change (low heat sensitivity) can be obtained.

Further, per 100 parts by mass of the polyol mixture (X), the proportion of the polyol (A) and the polyol (B) in total is preferably at least 70 parts by mass, more preferably at least 75 parts by mass, particularly preferably at least 90 parts by mass. The upper limit is 99 parts by mass. When the proportion of the polyol (A) and the polyol (B) in total in the polyol mixture (X) is within the above range, a flexible polyurethane foam being excellent in the low resiliency, being excellent in the durability and having good air flow can be obtained.

Further, the proportion of the monool (D) is preferably from 1 to 30 parts by mass, more preferably from 1 to 25 parts by mass, particularly preferably from 1 to 10 parts by mass, per 100 parts by mass of the total amount of the polyol (A) and the polyol (B). When the proportion of the monool (D) is within the above range, a flexible polyurethane foam being excellent in the low resiliency, being excellent in the durability and having good air flow will be obtained.

Further, in a case where the polyol mixture (X) contains the polyol (C), the proportion of the polyol (C) is preferably at most 10 parts by mass, more preferably from 1 to 10 parts by mass, particularly preferably from 1 to 8 parts by mass, per 100 parts by mass of the polyol mixture (X). When the polyol (C) is used and the proportion of the polyol (C) is within the above range, the air flow of a flexible polyurethane foam to be obtained will be improved.

Further, it is not necessary so much that the polyol mixture (X) contain the polyol (E), however, if the polyol (E) is used, the proportion of the polyol (E) is preferably at most 10 parts by mass, more preferably at most 5 parts by mass, particularly preferably at most 2 parts by mass per 100 parts by mass of the polyol mixture (X).

In the present invention, a specific example of the preferred composition of the polyol mixture (X) (100 parts by mass) is such that the polyol (A) is from 10 to 30 parts by mass, the polyol (B) is from 50 to 80 parts by mass, the polyol (C) is from 0 to 10 parts by mass, the monool (D) is from 1 to 24 parts by mass, and the polyol (E) is from 0 to 5 parts by mass. A more preferred composition of the polyol mixture (X) is such that the polyol (A) is from 15 to 30 parts by mass, the polyol (B) is from 60 to 75 parts by mass, the polyol (C) is from 1 to 8 parts by mass, the monool (D) is from 1 to 10 parts by mass, and the polyol (E) is from 0 to 2 parts by mass. A particularly preferred composition of the polyol mixture (X) is such that the polyol (A) is from 20 to 25 parts by mass, the polyol (B) is from 60 to 70 parts by mass, the polyol (C) is from 1 to 7 parts by mass, the monool (D) is from 1 to 7 parts by mass, and the polyol (E) is 0 part by mass.

The content of Zn and Co as the catalyst residue contained in the polyol mixture (X) is from 0.1 to 200 ppm, preferably from 0.5 to 100 ppm, particularly preferably from 1 to 50 ppm. By containing Zn and Co in a total amount of from 0.1 to 200 ppm, the foaming stability at the time of production of the flexible polyurethane foam will be improved, and cell roughing and shrinkage of the foam can be suppressed. Further, the flame retardancy of the flexible polyurethane foam to be obtained will be improved.

The total content of Zn and Co contained in the polyol mixture (X) is determined by the following method.

### (Method of measuring the total content of Zn and Co)

20 g of the polyol mixture is weighed in a platinum dish, burned by a gas burner to be incinerated, and completely incinerated further in an electric furnace at 600°C. The ash residue was dissolved in 2 mL of 6 N hydrochloric acid, quantitatively dissolved in distilled water to be 100 mL, and the amounts of Zn and Co contained in the ash residue are measured by an atomic absorption spectrometer. The amounts of Zn and Co are quantitatively determined from a calibration curve prepared by a metal standard liquid.

As a method of incorporating Zn and Co in the polyol mixture (X), (i) a method of using an unpurified polyol (A), i.e. a polyol (A) in which the DMC catalyst remains, or (ii) another unpurified polyol or the like, produced by using the DMC catalyst, may, for example, be mentioned. Zn and Co should be contained in the polyol mixture (X) in a total content of from 0.1 to 200 ppm, and the method is not particularly limited.

The DMC catalyst to be used to incorporate Zn and Co in the polyol mixture (X) is preferably a zinc hexacyanocobaltate-t-butyl alcohol complex catalyst or a zinc hexacyanocobaltate-ethylene glycol dimethyl ether complex catalyst is preferred, whereby high effects of suppressing cell roughing of a flexible polyurethane foam to be obtained and shrinkage of the foam are obtained.

### <Polyisocyanate compound>

The polyisocyanate compound to be used in the present invention is not particularly limited, and may, for example, be an aromatic, alicyclic or aliphatic polyisocyanate having two or more isocyanate groups; a mixture of two or more of the above polyisocyanates; or a modified polyisocyanate obtained by modification thereof.

The polyisocyanate compound may, for example, be specifically tolylene diisocyanate (TDI), diphenylmethane diisocyanate (MDI), polymethylene polyphenyl polyisocyanate (common name: crude MDI), xylylene diisocyanate (XDI), isophorone diisocyanate (IPDI) or hexamethylene diisocyanate (HMDI). Further, the modified polyisocyanate may, for example, be specifically a prepolymer type modified product, a nurate modified product, a urea modified product or a carbodiimide modified product of the above polyisocyanate. Among them, TDI, MDI, crude MDI or a modified product thereof is preferred. Further, among them, TDI, crude MDI or a modified product thereof (particularly preferably a prepolymer type modified product) is preferably used, whereby the foaming stability will be improved, the durability will be improved, etc. Particularly, when a polyisocyanate compound having relatively low reactivity is preferred among TDI, crude MDI and a modified product thereof, whereby the air flow will be improved. Specifically, a TDI mixture with a high proportion (particularly preferably at least 30 mass%) of 2,6-TDI is preferred.

The amount of use of the polyisocyanate compound is preferably such an amount that the ratio of all active hydrogen-containing compounds and the polyisocyanate compound in the materials is at least 90 by the isocyanate index. The materials mean the polyol mixture (X), the polyisocyanate compound, the urethane-forming catalyst, the blowing agent and the foam stabilizer. The active hydrogen-containing compound means the polyol mixture (X), water which may be used as the blowing agent, or the like. The isocyanate index is represented by 100 times the value obtained by dividing the equivalent amount of isocyanate groups in the polyisocyanate compound by the total equivalent amount of all active hydrogen atoms in all active hydrogen-containing compounds in the materials such as the polyol, the monool and water.

In the process for producing a flexible polyurethane foam of the present invention, the ratio of all active hydrogen-containing compounds and the polyisocyanate compound in the materials is at least 90 by the isocyanate index. When the ratio is at least 90 by the isocyanate index, the polyols and the monool will moderately be used, the influence as the plasticizer tends to be small, and good washing durability will be obtained. Further, the urethane-forming catalyst is less likely to be diffused, and the flexible polyurethane foam produced hardly undergoes discoloration. The above ratio is preferably from 90 to 130, more preferably from 95 to 110 by the isocyanate index.

### <Urethane-forming catalyst>

As the urethane-forming catalyst to react the polyol mixture (X) with the polyisocyanate compound, among catalysts which accelerate the urethane-forming reaction, only catalysts not corresponding to Certi-PUR which limits use of materials which may adversely affect the human body and the environment, can be used. Such catalysts may be used alone or in combination of two or more.

Such a catalyst may, for example, be a metal carboxylate such as potassium acetate or potassium 2-ethylhexanoate; an organic metal compound such as stannous octoate or dioctyltin dilaurate; or a tertiary amine such as triethylenediamine, bis(2-dimethylaminoethyl) ether or N,N,N',N'-tetramethylhexamethylenediamine.

The amount of use of the urethane-forming catalyst is preferably from 0.001 to 5 parts by mass, more preferably from 0.01 to 3 parts by mass per 100 parts by mass of the polyol mixture (X). When it is at most the upper limit of the above range, the foaming reaction will easily be controlled, and when it is at least the lower limit of the above range, curing of the flexible polyurethane foam will be good.

As the organic metal compound, dioctyltin dilaurate is preferably used. When dioctyltin dilaurate is used, its amount is preferably from 0.01 to 3 parts by mass, more preferably from 0.03 to 2 parts by mass, further preferably from 0.05 to 1 part by mass, most preferably from 0.07 to 0.5 part by mass, per 100 parts by mass of the polyol mixture (X). When it is at most the upper limit of the above range, shrinkage of the flexible polyurethane foam will be suppressed, and when it is at least the lower limit of the above range, settling of the flexible polyurethane foam will be suppressed, whereby a flexible polyurethane foam having a good appearance can be produced.

As the urethane-forming catalyst, use of the organic metal compound in combination with the tertiary amine is preferred, whereby the compatibility between the blowing agent and the polyisocyanate will be good, whereby small homogeneous bubbles will form at the time of foaming. The tertiary amine is preferably triethylenediamine, in view of easy control of the foaming behavior and in view of the economical efficiency. In a case where a tertiary amine is used in combination, its amount is preferably from 0.01 to 3 parts by mass, more preferably from 0.05 to 2 parts by mass, further preferably from 0.1 to 1 part by mass, most preferably from 0.2 to 0.5 part by mass, per 100 parts by mass of the polyol mixture (X). When it is at most the upper limit of the above range, the foaming reaction will easily be controlled, and when it is at least the lower limit of the above range, good curing properties will be obtained.

### <Foam stabilizer>

The foam stabilizer may, for example, be a silicone type foam stabilizer or a fluorine type foam stabilizer. Among them, a silicone type foam stabilizer is preferred. Among the silicone type foam stabilizers, preferred is a silicone type foam stabilizer containing a polyoxyalkylene/dimethylpolysiloxane copolymer as the main component. The foam stabilizer may be the polyoxyalkylene/dimethylpolysiloxane copolymer itself or may be a mixture of it with another component to be combined. Such another component to be combined may, for example, be polyalkylmethylsiloxane, a glycol or a polyoxyalkylene compound. The foam stabilizer is particularly preferably a foam stabilizer mixture containing the polyoxyalkylene/dimethylpolysiloxane copolymer, polyalkylmethylsiloxane and a polyoxyalkylene compound, in view of excellent stability of a flexible polyurethane foam. Such a foam stabilizer mixture may, for example, be SZ-1127, L-580, L-582, L-520, SZ-1919, L-5740S, L-5740M, SZ-1111, SZ-1127, SZ-1162, SZ-1105, SZ-1328, SZ-1325, SZ-1330, SZ-1306, SZ-1327, SZ-1336, SZ-1339, L-3601, SZ-1302, SH-192, SF-2909, SH-194, SH-190, SRX-280A, SRX-298, SF-2908, SF-2904, SRX-294A, SF-2965, SF-2962, SF-2961, SRX-274C, SF-2964, SF-2969, PRX-607, SZ-1711, SZ-1666, SZ-1627, SZ-1710, L-5420, L-5421, SZ-1669, SZ-1649, SZ-1654, SZ-1642, SZ-1720, SH-193, etc. manufactured by Dow Corning Toray Co., Ltd., F-114, F-121, F-122, F-348, F-341, F-502, F-506, F-607, F-606, etc. manufactured by Shin-Etsu Chemical Co., Ltd., Y-10366, L-5309, TFA-4200, TFA-4202, etc. manufactured by GE Toshiba Silicones, or B-8110, B-8017, B-4113, B-8727LF, B-8715LF, B-8404, B-8462, etc. manufactured by Goldschmidt. The foam stabilizers may be used in combination of two or more, or a foam stabilizer other than the above specific foam stabilizer may be used in combination.

The amount of use of the foam stabilizer is preferably from 0.01 to 2 parts by mass, more preferably from 0.1 to 0.5 part by mass per 100 parts by mass of the polyol mixture (X).

### <Blowing agent>

As the blowing agent, a known blowing agent such as a fluorinated hydrocarbon may be used, and preferred is at least one member selected from the group consisting of water and inert gas. The inert gas may, for example, be specifically preferably the air, nitrogen or carbon dioxide gas. Among them, water is most preferred in consideration of the environment.

The amount of use of the blowing agent is, in a case where water is used, preferably at most 10 parts by mass, more preferably from 0.1 to 4 parts by mass per 100 parts by mass of the polyol mixture (X). When a low density flexible polyurethane foam is to be produced, it is preferred to use water in an amount of from 0.5 to 5 parts by mass per 100 parts by mass of the polyol mixture.

### <Other assistants>

When a flexible polyurethane foam is to be produced in the present invention, in addition to the above-described urethane-forming catalyst, blowing agent and foam stabilizer, desired additives may also be used. The additives may, for example, be a filler such as potassium carbonate or barium sulfate; a surfactant such as an emulsifier; an anti-aging agent such as an antioxidant or an ultraviolet absorber; and a flame retardant, a plasticizer, a coloring agent, an antifungal agent, a cell opener, a dispersing agent and a discoloration inhibiter.

The antioxidant to be used in the present invention is not particularly limited and may optionally be selected from commercially available antioxidants. It may, for example, be specifically dibutylhydroxytoluene (BHT), octadecyl-3-(3,5-di-t-butyl-4-hydroxyphenyl)propionate (tradename: IRGANOX 1076, manufactured by BASF Japan Ltd.), pentaerythritol-tetrakis[3-(3,5-di-t-butyl-4-hydroxyphenyl)propionate] (tradename: IRGANOX 1010, manufactured by BASF Japan Ltd.) or 4,4'-bis(α,α-dimethylbenzyl)diphenylamine (tradename: NONFLEX DCD, manufactured by Seiko Chemical Co., Ltd.), but the antioxidant is not limited thereto.

The antioxidants may be used alone or in combination of two or more. The addition concentration of the antioxidant is preferably from 50 to 20,000 ppm, more preferably from 100 to 10,000 ppm, further preferably from 500 to 8,000 ppm, particularly preferably from 1,000 to 6,000 ppm in the polyol mixture (X). By containing the antioxidant in an amount of at least the lower limit of the above range in the polyol mixture (X), scorching of the foam due to heat generation at the time of foaming can be suppressed, and by containing it in an amount of at most the upper limit of the above range, collapse and the like will be suppressed, whereby good foaming stability will be secured.

### <Foaming method>

A method of forming the flexible polyurethane foam to be obtained by the present invention may be a method of injecting the reactive mixture into a closed mold to carry out expansion molding (mold method) or a method of foaming the reactive mixture in an open system (slab method), and a slab method is preferred. Specifically, it may be carried out by a known method such as a one shot method, a semiprepolymer method or a prepolymer method. For production of the flexible polyurethane foam, a commonly employed production apparatus may be employed.

In formation of the flexible polyurethane foam to be obtained in the present invention, the reactivity of the reactive mixture is preferably moderate. If the reactivity is too high, a flexible polyurethane foam having bad appearance will be formed. If the reactivity is too low, the productivity tends to be poor.

### <Flexible polyurethane foam>

The flexible polyurethane foam obtainable by the present invention is characterized by having low resiliency, and the rebound resilience of the core is preferably at most 20%, more preferably at most 18%, especially preferably at most 15%, most preferably at most 12%. When the rebound resilience of the core is at most 20%, sufficient low resiliency will be achieved. Usually the lower limit is 0%. The rebound resilience of the core is measured by a method in accordance with JIS K6400 (1997 edition). Further, in the present invention, "the core" means a portion having the skin portion removed from the center portion of the flexible polyurethane foam.

The flexible polyurethane foam obtainable by the present invention has good durability. The index of the durability is represented by the compression set and wet set, and in the present invention, they were measured at a compressibility of 50% and 90%. The flexible polyurethane foam obtainable by the present invention has particularly a low wet set which is the index of the durability in a humid state. The compression set and the wet set are measured by a method in accordance with JIS K6400 (1997 edition).

Of the flexible polyurethane foam obtainable by the present invention, the compression set at a compressibility of 50% is preferably at most 10%, more preferably at most 6%, especially preferably at most 5%, most preferably at most 4%. The compression set at a compressibility of 90% is preferably at most 20%, more preferably at most 15%, especially preferably at most 12%, most preferably at most 10%.

Further, of the flexible polyurethane foam obtainable by the present invention, the wet set at a compressibility of 50% is preferably at most 15%, more preferably at most 10%, particularly preferably at most 5%, most preferably at most 4%. The wet set at a compressibility of 90% is preferably at most 20%, more preferably at most 15%, especially preferably at most 12%, most preferably at most 10%.

The core density of the flexible polyurethane foam obtainable by the present invention is preferably from 10 to 110 kg/m³, more preferably from 10 to 80 kg/_{M}³, particularly preferably from 10 to 50 kg/m³. The flexible polyurethane foam obtainable by the present invention is particularly **characterized in that** it stably foams even at a low density, its production is easy and it is excellent in the durability.

### EXAMPLES

Now, the present invention will be described in further detail with reference to Examples. However, the present invention is by no means restricted to the following Examples. The values in Examples and Comparative Examples mean parts by mass. Further, the degree of unsaturation was measured by a method in accordance with JIS K1557 (1970 edition).

### (Materials)

Polyol A1: A polyoxypropylene polyol having an average of 2 hydroxy groups and a hydroxy value of 14 mgKOH/g, obtained in such a manner that propylene oxide is subjected to ring-opening polymerization to dipropylene glycol as an initiator in the presence of a potassium hydroxide catalyst to a number average molecular weight of 1,000, followed by purification by magnesium silicate to prepare an initiator (a1), and then propylene oxide is subjected to ring-opening addition polymerization to the initiator (a1) in the presence of a zinc hexacyanocobaltate-tert-butyl alcohol complex catalyst as the DMC catalyst.
Polyol B1: A polyoxypropylene polyol having an average of 2 hydroxy groups and a hydroxy value of 160 mgKOH/g, obtained by subjecting propylene oxide to ring-opening addition polymerization to dipropylene glycol as an initiator by using a potassium hydroxide catalyst.
Polyol B2: A polyoxypropylene polyol having an average of 3 hydroxy groups and a hydroxy value of 168 mgKOH/g, obtained by subjecting propylene oxide to ring-opening addition polymerization to glycerin as an initiator by using a potassium hydroxide catalyst.
Polyol C1: A polyoxypropylene oxyethylene polyol having an average of 3 hydroxy groups, a hydroxy value of 48 mgKOH/g and a total oxyethylene group content of 80 mass%, obtained by subjecting a mixture of propylene oxide and ethylene oxide to ring-opening addition polymerization to glycerin as an initiator by using a potassium hydroxide catalyst.
Monool D1: A polyoxypropylene monool having an average of one hydroxy group and a hydroxy value of 16.7 mgKOH/g, obtained by subjecting propylene oxide to ring-opening addition polymerization to n-butyl alcohol as an initiator by using a zinc hexacyanocobaltate-tert-butyl alcohol complex catalyst.
Blowing agent: Water
Catalyst A: Dioctyltin dilaurate (manufactured by NITTO KASEI CO., LTD., tradename: NEOSTANN U-810)
Catalyst B: Dibutyltin dilaurate (manufactured by NITTO KASEI CO., LTD., tradename: NEOSTANN U-100)
Catalyst C: Tin 2-ethyl hexanoate (manufactured by Air Products and Chemicals, Inc., tradename: Dabco T-9)
Catalyst D: A dipropylene glycol solution of triethylenediamine (manufactured by TOSOH CORPORATION, tradename: TEDA-L33)
Foam stabilizer A: Silicone type foam stabilizer (manufactured by Dow Corning Toray, Co., Ltd., tradename: SRX-298)
Foam stabilizer B: Silicone type foam stabilizer (manufactured by Dow Corning Toray, Co., Ltd., tradename: SZ-1327)
Polyisocyanate compound a: TDI-80 (a mixture of 2,4-TDI/2,6-TDI=80/20 mass%), isocyanate group content: 48.3 mass% (manufactured by Nippon Polyurethane Industry Co., Ltd., tradename: CORONATE T-80)

### EXAMPLES 1 to 7

A mixture (hereinafter sometimes referred to as "a polyol system solution") of all materials other than the polyisocyanate compound, among the materials and compounding ingredients as identified in Table 1 or 2, was adjusted to a liquid temperature of 23°C±1°C, and the polyisocyanate compound was adjusted to a liquid temperature of 23°C±1°C. A predetermined amount of the polyisocyanate compound was added to the polyol system solution, followed by mixing by a mixer (3,000 revolutions per minute) for 5 seconds, and the mixture was injected in an open-topped wooden box of 600 mm in length, 600 mm in width and 400 mm in height, covered with a plastic sheet, at room temperature (23°C), to produce a flexible polyurethane foam (slab foam). The produced flexible polyurethane foam was taken out and left to stand in a room adjusted to room temperature (23°C) and a humidity of 50%RH for at least 24 hours, and then various physical properties were measured. The measurement results are shown in Tables 1 and 2. Examples 1 to 5 are Examples of the present invention, and Examples 6 and 7 are Comparative Examples.

### [Evaluation methods]

### (Cream time, rise time)

The time when mixing of the polyol system solution and the polyisocyanate compound was initiated was regarded as 0 second, and the time between 0 second and the visually confirmed onset of the foaming reaction was defined as cream time, and the time between 0 second and the termination of foaming and the outgassing (socalled healthy bubbles) observed from the upper portion of the flexible polyurethane foam was defined as rise time, and they were measured by a stopwatch.

### (Core density, rebound resilience of the core)

The core density and the rebound resilience of the core were measured by a method in accordance with JIS K6400 (1997 edition). A sample obtained by removing the skin portion from the center portion of the flexible polyurethane foam, followed by cutting into a size of 250 mm in length, 250 in width and 50 mm in height, was used for the measurement.
(25% Hardness, 50% hardness, 65% hardness, air flow, tensile strength, elongation, tear strength, hysteresis loss, 50% compression set, 50% wet set, 90% compression set and 90% wet set)

The 25% hardness (ILD), the 50% hardness (ILD), the 65% hardness (ILD), the tensile strength, the elongation, the tear strength, the hysteresis loss, the 50% compression set, the 50% wet set, the 90% compression set and the 90% wet set were measured by a method in accordance with JIS K6400 (1997 edition). The air flow was measured by a method in accordance with the method B in JIS K6400 (1997 edition).

### (Certi-PUR Environmental test)

The Certi-PUR environmental test was carried out as follows. 1 g (about 5 mm cube) of the produced flexible polyurethane foam was immersed with 50 g of an artificial sweat solution, and subjected to ultrasonic waves at 40°C for one hour. Using the obtained artificial sweat solution as a measurement solution, the measurement solution was subjected to an analysis method in accordance with Deutsche Industry Normen DIN38407-13 to carry out quantitative analysis by gas chromatography mass spectrometry. As the evaluation results, a case where 50 ppb or higher of tributyltin, 100 ppb or higher of dibutyltin or 100 ppb or higher of monobutyltin as the specifications of Certi-PUR was confirmed was regarded as × (poor), and a case where less than 50 ppb of tributyltin, less than 100 ppb of dibutyltin and less than 100 ppb of monobutyltin were confirmed was regarded as ○ (good).

Further, the artificial sweat solution is an aqueous solution comprising the following three components adjusted to have a pH of 5.5 with a 0.1 mol/L sodium hydroxide aqueous solution, in accordance with ISO 105-E104 (1994).
· L-Histidine monohydrochloride monohydrate: 0.5 g/L
sodium dihydrogen phosphate dihydrate: 2.2 g/L
· Salt: 5 g/L

**TABLE 1**

| Ex. | | | 1 | 2 | 3 | 4 | 5 |
|---|---|---|---|---|---|---|---|
| Blend ratio of reactive mixture (parts by mass) | Polyol or monool | A1 | 20.9 | 21.2 | 21.4 | 21.7 | 22.0 |
| | | B1 | 29.3 | 29.7 | 30.1 | 30.5 | 31.0 |
| | | B2 | 36.5 | 36.9 | 37.4 | 37.9 | 38.5 |
| | | C1 | 6.6 | 5.4 | 4.2 | 3.0 | 1.5 |
| | | D1 | 6.7 | 6.8 | 6.9 | 6.9 | 7.0 |
| | Blowing agent | | 1.0 | 1.3 | 2.0 | 2.6 | 4.2 |
| | Foam stabilizer | A | 0.4 | 0.4 | 0.8 | 0.8 | 0.8 |
| | | B | 0.8 | 0.8 | 0.8 | 0.8 | 0.8 |
| | Urethane-forming catalyst | A | 0.10 | 0.10 | 0.35 | 0.35 | 0.45 |
| | | B | | | | | |
| | | C | | | | | |
| | | D | 0.3 | 0.3 | 0.3 | 0.4 | 0.4 |
| | Polyisocyanate compound | a | 27.34 | 30.37 | 38.39 | 44.50 | 57.67 |
| | | Isocyanate index | 100 | 100 | 103 | 103 | 98 |
| Physical properties | Cream time | (s) | 32 | 34 | 20 | 18 | 14 |
| | Rise time | (s) | 264 | 208 | 116 | 87 | 58 |
| | Core density | (kg/m³) | 76.4 | 59.2 | 41.4 | 33.4 | 22.7 |
| | 25% Hardness (ILD) | (N/314cm²) | 77 | 60 | 71 | 74 | 69 |
| | 50% Hardness (ILD) | (N/314cm²) | 119 | 91 | 102 | 110 | 104 |
| | 65% Hardness (ILD) | (N/314cm²) | 190 | 140 | 150 | 162 | 157 |
| | Air flow | (L/min) | 12 | 23 | 29 | 41 | 86 |
| | Rebound resilience of the core | (%) | 11 | 12 | 10 | 12 | 15 |
| | Tensile strength | (kPa) | 69 | 74 | 64 | 79 | 35 |
| | Elongation | (%) | 265 | 278 | 173 | 194 | 78 |
| | Tear strength | (N/cm) | 3.7 | 4.9 | 5.6 | 4.7 | 1.8 |
| | Hysteresis loss | (%) | 27.7 | 31.9 | 43.8 | 48.9 | 57.7 |
| | 50% compression set | (%) | 3.7 | 3.9 | 3.8 | 3.8 | 8.8 |
| | 50% wet set | (%) | 2.6 | 2.3 | 3.2 | 3.5 | 9.9 |
| | 90% compression set | (%) | 10.9 | 10.7 | 6.6 | 10.6 | 14.4 |
| | 90% wet set | (%) | 3.5 | 5.1 | 3.8 | 8.2 | 15.4 |
| | Certi-PUR Environmental test | | ○ | ○ | ○ | ○ | ○ |

**TABLE 2**

| Ex. | | | 6 | 7 |
|---|---|---|---|---|
| Blend ration of reactive mixture (parts by mass) | Polyol or monool | A1 | 21.2 | 21.5 |
| | | B1 | 29.7 | 29.4 |
| | | B2 | 36.9 | 36.8 |
| | | C1 | 5.4 | 5.5 |
| | | D1 | 6.8 | 6.8 |
| | Blowing agent | | 2.6 | 2.6 |
| | Foam stabilizer | A | 0.4 | 0.4 |
| | | B | 0.8 | 0.8 |
| | Urethane-forming catalyst | A | | |
| | | B | 0.35 | |
| | | C | | 0.3 |
| | | D | 0.4 | 0.3 |
| | Polyisocyanate compound | a | 44.23 | 44.23 |
| | | Isocyanate index | 103 | 103 |
| Physical properties | Cream time | (s) | 11 | Collapse |
| | Rise time | (s) | 65 | |
| | Core density | (kg/m³) | 33.6 | (34) |
| | 25% Hardness (ILD) | (N/314cm²) | 87 | |
| | 50% Hardness (ILD) | (N/314cm²) | 133 | |
| | 65% Hardness (ILD) | (N/314cm²) | 194 | |
| | Air flow | (L/min) | 31 | |
| | Rebound resilience of the core | (%) | 13 | |
| | Tensile strength | (kPa) | 69 | |
| | Elongation | (%) | 155 | |
| | Tear strength | (N/cm) | 4.7 | |
| | Hysteresis loss | (%) | 50.4 | |
| | 50% compression set | (%) | 3.0 | |
| | 50% wet set | (%) | 3.1 | |
| | 90% compression set | (%) | 12.5 | |
| | 90% wet set | (%) | 4.2 | |
| | Certi-PUR Environmental test | | × | |

As shown in Table 1, each of the flexible polyurethane foams in Examples 1 to 5 produced by using specific polyols (A) and (B) and monool (D) and using dioctyltin dilaurate not corresponding to Certi-PUR as the urethane-forming catalyst is excellent in mechanical properties such as the low resilience and the elongation optimum for a mattress, etc., has low 50% compression set and 50% wet set of at most 10%, which are indices of the durability, has low 90% compression set and 90% wet set of at most 20%, and has good durability, even though the urethane-forming catalyst is dioctyltin dilaurate. These are equal to those in Example 6 in which dibutyltin dilaurate corresponding to the regulation by Certi-PUR was used for preparation.

Further, in Examples 1 to 5, surprisingly, a low density flexible polyurethane foam could stably be obtained. In addition, the cream time of the reactive mixture was relatively long, the reactive mixture had preferred reactivity, and it was confirmed to be a reactive mixture excellent in the operation properties.

On the other hand, the flexible polyurethane foam in Example 6 produced by using dibutyltin dilaurate corresponding to the regulation by Certi-PUR as the urethane-forming catalyst, was excellent in the low resilience, the mechanical properties and the like, but was poor in the outer appearance, since the cream time of the reactive mixture was short, and the reactivity was too high.

In Example 7 in which tin 2-ethylhexanoate was used as the urethane-forming catalyst, a flexible polyurethane foam having a core density of 34 kg/m³ could not be produced.

### INDUSTRIAL APPLICABILITY

The flexible polyurethane foam obtainable by the present invention has low resilience, is suitable as a shock absorber, a sound absorbent or a vibration absorber, and is also suitable as bedding, matting, cushions, seat cushions for automobiles, back materials, or top layer wadding materials by flame lamination. It is particularly suitable for bedding (such as mattresses or pillows).

The entire disclosure of Japanese Patent Application No. 2009-217211 filed on September 18, 2009 including specification, claims and summary is incorporated herein by reference in its entirety.

## Claims

1. A process for producing a flexible polyurethane foam, which comprises reacting a polyol mixture (X) and a polyisocyanate compound in the presence of a urethane-forming catalyst, a blowing agent and a foam stabilizer, wherein
the polyol mixture (X) contains the following polyol (A), the following polyol (B) and the following monool (D);
the ratio of all active hydrogen-containing compounds and the polyisocyanate compound in the materials is at least 90 by the isocyanate index; and
the urethane-forming catalyst contains dioctyltin dilaurate;
polyol (A): a polyoxyalkylene polyol having an average of from 2 to 3 hydroxy groups, a hydroxy value of from 10 to 60 mgKOH/g and an oxyethylene group content of from 0 to 30 mass%;
polyol (B): a polyoxyalkylene polyol having an average of from 2 to 3 hydroxy groups and a hydroxy value of from 100 to 250 mgKOH/g;
monool (D): a polyoxyalkylene monool having a hydroxy value of from 10 to 200 mgKOH/g.

2. The process for producing a flexible polyurethane foam according to Claim 1, wherein the ratio of the polyol (A) and the polyol (B) is such that the proportion of the polyol (A) is from 5 to 50 parts by mass per 100 parts by mass of the total amount of the polyol (A) and the polyol (B).

3. The process for producing a flexible polyurethane foam according to Claim 1 or 2, wherein the proportion of the monool (D) is from 1 to 30 parts by mass per 100 parts by mass of the total amount of the polyol (A) and the polyol (B).

4. The process for producing a flexible polyurethane foam according to any one of Claims 1 to 3, wherein the monool (D) is a polyoxypropylene monool obtained by subjecting only propylene oxide to ring-opening addition polymerization to an initiator.

5. The process for producing a flexible polyurethane foam according to any one of Claims 1 to 4, wherein the polyol mixture (X) further contains the following polyol (C) in an amount of from 2 to 10 parts per 100 parts by mass of the entire polyol mixture:
polyol (C): a polyoxyalkylene polyol having an average of from 2 to 6 hydroxy groups, a hydroxy value of from 10 to 60 mgKOH/g and an oxyethylene group content of from 50 to 100 mass%.

6. The process for producing a flexible polyurethane foam according to any one of Claims 1 to 5, wherein the urethane-forming catalyst is contained in an amount of from 0.01 to 3.0 parts by mass per 100 parts by mass of the polyol mixture (X).

7. The process for producing a flexible polyurethane foam according to any one of Claims 1 to 6, wherein the blowing agent is water.

8. The process for producing a flexible polyurethane foam according to any one of Claims 1 to 7, wherein the isocyanate index is from 90 to 130.

9. The process for producing a flexible polyurethane foam according to any one of Claims 1 to 8, which is a method of foaming in an open system (slab method).

10. A mattress using a flexible polyurethane foam produced by the process as defined in any one of Claims 1 to 9.
